# EUROPEAN PATENT APPLICATION

(11) **EP 2 450 404 A1**
(43) Date of publication of application: **09.05.2012**
(21) Application number: 11008560.2
(22) Date of filing: 25.10.2011
(51) Int. Cl.: C08L 23/20, C08L 23/22, C08L 25/00, C08L 53/00

(54) **Resin composition for ink jet**

(30) Priority: 05.11.2010 JP 2010248885
(71) Applicant: Canon Kabushiki Kaisha, Tokyo (JP)
(72) Inventor: Nagaoka, Kyosuke, Tokyo (JP); Shimomura, Akihiko, Tokyo (JP); Ujita, Toshihiko, Tokyo (JP); Fukushima, Takashi, Tokyo (JP); Matsushita, Takushi, Tokyo (JP); Takenaka, Hiroyuki, Tokyo (JP)
(74) Representative: Weser, Thilo

(57) **Abstract**

Provided is a resin composition for ink jet, including at least a component (A) and a component (B), in which the component (A) includes a (b)-(a)-(b) type isobutylene-based triblock copolymer composed of an isobutylene-based polymer block (a) and a styrene-based polymer block (b), and the component (B) includes a cyclic-polyolefin-based polymer. The resin composition for ink jet has water-vapor barrier properties and gas barrier properties comparable to or more than those of crosslinked rubbers having high water-vapor barrier properties and high gas barrier properties, and can be molded by any of press-molding, injection molding, extrusion molding, and the like.

## Description

### BACKGROUND OF THE INVENTION

### Field of the Invention

The present invention relates to a resin composition for ink jet, which is used for an elastic member of an ink jet recording apparatus, such as an ink supply tube.

### Description of the Related Art

There is known an ink jet recording apparatus of such a type that a replaceable tank (ink tank) filled with ink is mounted separately from a carriage as an ink supply unit of the ink jet recording apparatus. The ink jet recording apparatus of this type adopts a structure in which the ink tank is connected via an ink supply tube to an ink jet recording head mounted on the carriage, and the ink is supplied to the ink jet recording head. For the ink jet recording apparatus of this type, the volume of the ink tank can be easily increased, and hence is it suitable for the purpose of using a relatively large amount of ink.

In carrying out recording with the ink jet recording apparatus of such type, the ink supply tube for connecting the ink tank to the ink jet recording head mounted on the carriage is also drawn and largely bent in association with the reciprocation motion of the carriage on which the recording head is mounted. Therefore, a fatigue failure may occur when the ink supply tube has a high hardness. Accordingly, the ink supply tube is required to have flexibility enough to resist the reciprocation motion. In particular, a reduction in size of an ink jet printer has been progressing in recent years, and in carrying out recording, the ink supply tube is required to be applicable to reciprocation motion with a smaller angle of bending and to have further flexibility.

Further, when moisture evaporates from the ink present in the ink supply tube to the outside of the ink supply tube, an increase in viscosity of the ink occurs, which may cause problems such as ejection abnormality and a reduction in printing quality due to a change in composition of the ink. Therefore, high water-vapor barrier properties are also requested of the ink supply tube.

In addition, when an external gas such as air permeates into the tube material, the external gas dissolves in the ink in the ink supply tube, and hence the deaeration rate of the ink reduces. Alternatively, ink ejection abnormality or a reduction in printing quality may be caused by the generation and growth of air bubbles in the ink. Therefore, high gas barrier properties are also requested of the ink supply tube. The gas barrier properties are very important in an ink jet recording apparatus using a piezoelectric device because a gas involved in the ink supply tube serves as a cushion to prevent energy necessary for ink ejection from being transferred to an ink chamber, which may prevent the ejection.

An ink seal or a valve is often used in a compressed state in order to prevent ink leakage, and hence is required to have high rubber elasticity enough to resist deformation.

A crosslinked rubber and a thermoplastic resin have been used as materials for the above-mentioned ink supply tube, ink seal, and valve. However, the crosslinked rubber involves problems in that it requires crosslinking and processing steps of a long period of time, and is difficult to process it in double molding with another material. Meanwhile, the thermoplastic resin has a high hardness as compared to a rubber, and hence cannot be used in a part requiring having high flexibility. In view of the foregoing, in recent years, a thermoplastic elastomer has attracted attention, which may be subjected to any of press molding, injection molding, extrusion molding, and the like to easily manufacture a molded article, and which is excellent in rubber elasticity and flexibility.

Examples of the thermoplastic elastomer include olefin-based, urethane-based, ester-based, styrene-based, and vinyl chloride-based thermoplastic elastomers. Of those, a styrene-based thermoplastic elastomer is excellent in flexibility and rubber elasticity. As the styrene-based thermoplastic elastomer, there are known a styrenebutadiene-styrene block copolymer (SBS), a styrene-isoprene-styrene block copolymer (SIS), a styrene-ethylene/butylene-styrene block copolymer (SEBS), and a styrene-ethylene/propylene-styrene block copolymer (SEPS), for example. In addition, in recent years, a styrene-isobutylene-styrene block copolymer (SIBS) has also been developed. Japanese Patent Application Laid-Open No. H09-300652 proposes an ink supply tube for ink jet recording of a laminate structure obtained using a material having ink resistance, a low water-vapor permeability, and a low rigidity for an inner layer in contact with ink and an outer layer in contact with external air and using a material having a low gas permeability for an intermediate layer. Regarding specific materials, polyethylene is used as the material for the inner layer and the outer layer, and an ethylene vinyl alcohol copolymer or polyvinylidene chloride is used as the material for the intermediate layer.

Japanese Patent Application Laid-Open No. 2005-305878 proposes a resin composition for ink jet using a thermoplastic elastomer. Specifically, SIBS, polyolefin, and liquid polybutene are used, and the resultant resin composition for ink jet has excellent gas barrier properties and water-vapor barrier properties and also is satisfactory in flexibility.

### SUMMARY OF THE INVENTION

However, the ethylene vinyl alcohol copolymer and polyvinylidene chloride as described in Japanese Patent Application Laid-Open No. H09-300652 are low in gas permeability but high in rigidity, and hence an ink supply tube using the same involves a problem in flexibility from the viewpoint of bending resistance.

Further, although an ink supply tube using polyethylene for an outer layer is suitable for an application of a large-sized printer, there remains a problem in a need for additional flexibility in an application of a small-sized printer, which requires reciprocation motion with a smaller bending angle. Further, an increase in cost due to the adoption of a laminate structure is also inevitable.

Meanwhile, a resin composition for ink jet using SIBS described in Japanese Patent Application Laid-Open No. 2005-305878 has excellent water-vapor barrier properties, gas barrier properties, and flexibility, and solves some of the above-mentioned problems.

However, the resin composition for ink jet using SIBS described in Japanese Patent Application Laid-Open No. 2005-305878 also tends to be still inferior in terms of water-vapor barrier properties and gas barrier properties as compared to crosslinked rubbers having high water-vapor barrier properties and high gas barrier properties. Therefore, in ink jet applications requiring water-vapor barrier properties and gas barrier properties comparable to those of the crosslinked rubbers, a crosslinked rubber was difficult to be replaced by the resin composition described in Japanese Patent Application Laid-Open No. 2005-305878 in some cases. It should be noted that hydrogenated nitrile rubber (H-NBR), chlorinated butyl rubber (Cl-IIR), brominated butyl rubber (Br-IIR), and the like are known as the crosslinked rubbers having high water-vapor barrier properties and high gas barrier properties.

Accordingly, there has been a demand for a resin composition for ink jet, which has water-vapor barrier properties and gas barrier properties comparable to or more than those of crosslinked rubbers having high water-vapor barrier properties and high gas barrier properties, and which may be subjected to any of press-molding, injection molding, extrusion molding, and the like to easily produce a molded article.

In view of the above-mentioned circumstances, an object of the present invention is to provide a resin composition for ink jet, which has water-vapor barrier properties and gas barrier properties comparable to or more than those of crosslinked rubbers having high water-vapor barrier properties and high gas barrier properties, and which may be easily molded by any of press-molding, injection molding, extrusion molding, and the like.

The present invention provides a resin composition for ink jet, including at least a component (A) and a component (B), in which the component (A) includes a (b)-(a)-(b) type isobutylene-based triblock copolymer composed of an isobutylene-based polymer block (a) and a styrene-based polymer block (b), and the component (B) includes a cyclic-polyolefin-based polymer.

Further features of the present invention will become apparent from the following description of exemplary embodiments.

### DESCRIPTION OF THE EMBODIMENTS

Resin composition for ink jet

The inventors of the present invention have achieved the above-mentioned object by mixing a specific thermoplastic elastomer component including a polymer block and a specific lubricant component.

The resin composition for ink jet of the present invention may comprise a thermoplastic elastomer composition including at least a component (A) as the thermoplastic elastomer component and a component (B) as the lubricant component. It should be noted that the resin composition for ink jet means a resin composition used for an ink jet recording apparatus.

Further, the present invention is applicable to an elastic member of an ink jet recording apparatus, in particular, an ink seal and a valve used for an ink supply tube and an ink flow path, for supplying ink from an ink tank to a recording head.

The component (A) is a (b)-(a)-(b) type isobutylene-based triblock copolymer composed of an isobutylene-based polymer block (a) and a styrene-based polymer block (b).

The component (B) is a cyclic-polyolefin-based polymer.

Hereinafter, each of the components is described.

### Component (A)

The isobutylene-based triblock copolymer as the component (A) has the styrene-based polymer block (b) as a hard segment and the isobutylene-based polymer block (a) as a soft segment.

The hard segment acts like a crosslinking point of a vulcanized rubber and blocks plastic deformation, and the soft segment undergoes soft plastic deformation. As a result, the triblock copolymer exhibits a rubber elasticity comparable to that of a vulcanized rubber.

The styrene-based polymer block (b) is a polymer block including at least one of a styrene unit and a styrene-based derivative unit. Alternatively, the styrene-based polymer block (b) may be a polymer block formed of at least one of a styrene unit and a styrene-based derivative unit. Examples of the styrene-based derivative unit include α-methylstyrene, β-methylstyrene, p-methylstyrene, p-chlorostyrene, p-bromostyrene, and 2,4,5-tribromostyrene. Of those, styrene is most preferred because of its low cost. Further, those polymers may be used alone or in combination of two or more kinds thereof. Examples of the monomer which may be included in the styrene-based polymer block (b) in addition to the styrene unit and the styrene-based derivative unit include indene and vinylnaphthalene. Further, they may be used alone or in combination of two or more kinds thereof.

The isobutylene-based polymer block (a) is a polymer block including at least an isobutylene unit. In other words, the isobutylene-based polymer block (a) is a polymer block formed of an isobutylene unit. Examples of the monomer which may be included in the isobutylene-based polymer block (a) in addition to the isobutylene unit include ethylene, propylene, 1-butene, and isoprene. Further, those polymers may be used alone or in combination of two or more kinds thereof.

Regarding the contents of the component (a) and the component (b) in the triblock copolymer (component (A)), the content of the component (a) is preferably 50 mass% or more and 90 mass% or less, and the content of the component (b) is preferably 10 mass% or more and 50 mass% or less, from the viewpoints of water-vapor barrier properties, gas barrier properties, flexibility, and processability. Further, the content of the component (a) is more preferably 70 mass% or more and 90 mass% or less, and the content of the component (b) is more preferably 10 mass% or more and 30 mass% or less.

When the content of the component (b) falls within the range of 10 mass% or more, a reduction in processability of the resin composition, which causes a difficulty in molding, can be easily prevented. Further, when the content of the component (b) falls within the range of 50 mass% or less, reductions in water-vapor barrier properties and gas barrier properties of the resin composition can be easily prevented.

The content of the component (a) and the content of the component (b) may be determined by ¹H-NMR measurement. The mass average molecular weight of the triblock copolymer is not particularly limited, but is preferably 40,000 or more and 150,000 or less, particularly preferably 60,000 or more and 130,000 or less from the viewpoints of processability, water-vapor barrier properties, gas barrier properties, and the like.

The mixing ratio of the component (A) in 100 mass% of the resin composition of the present invention is preferably 40 mass% or more, more preferably 50 mass% or more. When the mixing ratio is 40 mass% or more, reductions in flexibility, water-vapor barrier properties, and gas barrier properties of the resin composition can be easily prevented. Further, the mixing ratio of the component (A) is preferably 95 mass% or less from the viewpoint of the processability of the resin composition. It should be noted that the mixing ratios of the component (A) and the component (B) in resin components may be determined by ¹H-NMR measurement.

### Component (B)

The cyclic-polyolefin-based polymer as the component (B) to be mixed as a lubricant is described. The "lubricant" as used herein refers to a component which is mixed for the purpose of achieving an improvement in processability of the resin composition, and which imparts an effect of improving the fluidity and cooling rate of the resin composition during molding and an effect of improving the processability. Further, in extrusion molding, the lubricant is required to be added so that a resin immediately after extruded in a highly fluidable state from a nozzle can maintain a tubular shape as well.

The cyclic-polyolefin-based polymer (component B) means a polymer having an alicyclic structure among aliphatic compounds each obtained by ring-opening polymerization of a cycloolefin or copolymerization of a cycloolefin with an α-olefin, and specifically refers to a ring-opening (co)polymer of a cyclic olefin and a hydrogenated product thereof, an addition (co)polymer of a cyclic olefin, or a random copolymer of a cyclic olefin with an α-olefin such as ethylene, propylene, butene, or pentene, for example. Examples of the cyclic-polyolefin-based polymer (component B) include a cyclic polyolefin resin obtained by ring-opening metathesis polymerization of a norbornene-based derivative, a cyclic polyolefin copolymer resin obtained by copolymerization of a norbornene-based derivative with an α-olefin such as ethylene, propylene, butene, or pentene, and a 1,2-addition polymer and a 1,4-addition polymer of cyclopentadiene. Of those, in particular, a cyclic polyolefin resin obtained by ring-opening metathesis polymerization of a norbornene-based derivative and a cyclic polyolefin copolymer resin obtained by copolymerization of a norbornene-based derivative with an α-olefin are suitably used in the present invention because the resins are excellent in processability. The cyclic polyolefin resin is a ring-opening polymerization reaction product using a norbornene-based derivative, and the cyclic polyolefin copolymer is a copolymerization reaction product using a norbornene-based derivative. It should be noted that the norbornene-based derivative means a compound having, in a main skeleton, a molecular structure (norbornene structure) in which para positions of cyclohexene are crosslinked with a methylene group. Examples of the norbornene-based derivative include norbornene, bicyclohept-2-ene(2-norbornene) and a derivative thereof, 5-propylnorbornene, 5-phenylnorbornene, 1-methylnorbornene, 6-methylnorbornene, 6-ethylnorbornene, 5,6-dimethylnorbornene, benzylnorbornene, tetracyclo-3-dodecene, 8-methyltetracyclo-3-dodecene, 8-ethyltetracyclo-3-dodecene, and 5,10-dimethyltetracyclo-3-dodecene. Further, those cyclic-polyolefin-based resins may be used alone or in combination of two or more kinds thereof.

The resin composition of the present invention includes the cyclic-polyolefin-based polymer as the lubricant, and hence is excellent in water-vapor barrier properties and gas barrier properties even when compared to a conventional resin composition mixed with polypropylene. Further, the resin composition has water-vapor barrier properties and gas barrier properties comparable to or more than those of crosslinked rubbers having high water-vapor barrier properties and high gas barrier properties, such as hydrogenated nitrile rubber (H-NBR), chlorinated butyl rubber (Cl-IIR), and brominated butyl rubber (Br-IIR). Further, the resin composition is mixed with the cyclic-polyolefin-based polymer, which has a low molding shrinkage and high dimensional accuracy as compared to polypropylene. Hence, a molded article formed of the resin composition of the present invention for ink jet provides satisfactory dimensional accuracy.

The mixing amount of the component (B) in 100 mass% of the resin composition of the present invention is preferably 1 mass% or more and 40 mass% or less, more preferably 5 mass% or more and 30 mass% or less from the viewpoints of processability and flexibility. When the mixing amount of the component (B) is 1 mass% or more, a reduction in processability of the resin composition, which causes a difficulty in molding of the resin composition, can be easily prevented. Further, when the mixing amount of the component (B) is 40 mass% or less, a reduction in flexibility of the resin composition can be easily prevented.

Further, the melt mass flow rate (MFR) (measured in accordance with JIS K7210: 1999) of the component (B) is not particularly limited. However, the MFR of the component (B) is preferably 0.1 g/10 min or more and 50 g/10 min or less, more preferably 0.1 g/10 min or more and 30 g/10 min or less from the viewpoint of processability.

### Additional component

The resin composition of the present invention may be mixed with a variety of components as necessary in addition to the component (A) and the component (B) in such a range that the object of the present invention is not impaired. For example, there may be appropriately mixed various additives such as a thermoplastic elastomer component except the component (A), a compatibilizer, a softening agent, a flame retardant, a surfactant, a foaming agent, an antioxidant, an anti-aging agent, and an adhesion-imparting agent.

Examples of the thermoplastic elastomer component except the component (A) include the following. Specifically, they are a styrene-ethylene/butylene-styrene triblock copolymer (SEBS), a styrene-isoprene-styrene block copolymer (SIS) in which the isoprene block is composed of 3,4-polyisoprene, and a styrene-isoprene-styrene block copolymer (SIS) in which the isoprene block is composed of 1,4-polyisoprene.

Of those, in particular, a styrene-ethylene/butylene-styrene triblock copolymer (SEBS) is a material excellent in processability as an ink supply tube material. Further, the SEBS is a material having relatively high water-vapor barrier properties and gas barrier properties among styrene-based thermoplastic elastomers, and hence can be alloyed into the resin composition of the present invention through the addition thereof in a small amount to improve processability more greatly while maintaining high water-vapor barrier properties and gas barrier properties.

The mixing ratio of the thermoplastic elastomer component except the component (A) in 100 mass% of the resin composition of the present invention is preferably 20 mass% or less, more preferably 15 mass% or less, from the viewpoints of water-vapor barrier properties and gas barrier properties.

The mass average molecular weight of the thermoplastic elastomer component except the component (A) is not particularly limited. However, the mass average molecular weight is preferably 40,000 or more and 120,000 or less for the styrene-ethylene/butylene-styrene triblock copolymer (SEBS), for example, from the viewpoints of processability and the like.

Further, in particular, as a compatibilizer for improving the kneadability of the resin composition, a petroleum-based softening agent, paraffin oil, polybutene, or any other compound may be mixed as necessary. Further, the compound not only plays a role as a compatibilizer but also plays roles in imparting additional flexibility to a molded article obtained from the resin composition and in adjusting the hardness. Of those, polybutene has high water-vapor barrier properties and high gas barrier properties, and causes little reduction in water-vapor barrier properties and gas barrier properties even when mixed into the resin composition of the present invention.

As the polybutene, a polymer obtained by polymerization of isobutene as a main monomer, which is obtained using a C4 fraction in petroleum purification as a raw material, such as a homopolymer of isobutene or a copolymer of isobutene with n-butene may be used. However, the above-mentioned petroleum-based softening agent, paraffin oil, and polybutene tend to reduce the tensile strength and rubber elasticity of the resin composition. Therefore, the mixing amount of those compatibilizer components in 100 mass% of the resin composition of the present invention is preferably 25 mass% or less, more preferably 15 mass% or less.

The resin composition of the present invention may be composed of various mixture components described above, and the resin composition preferably has a rubber hardness of 30 or more and less than 80, which is measured in accordance with JIS K 6253, from the viewpoint of flexibility which allows the resin composition to be used in an ink jet recording apparatus. Further, the resin composition of the present invention preferably has a water-vapor permeability of less than 1.5 g/m² · 24 h and an air permeability of less than 1.5×10⁻¹⁰ cm³ · cm/cm² · s · cmHg. Thus, water-vapor barrier properties and gas barrier properties comparable to or more than those of crosslinked rubbers having high water-vapor barrier properties and high gas barrier properties, such as hydrogenated nitrile rubber (H-NBR), chlorinated butyl rubber (Cl-IIR), and brominated butyl rubber (Br-IIR), can be easily obtained. It should be noted that the above-mentioned water-vapor permeability is a value obtained by producing a sheet having a thickness of 0.5 mm using the resin composition of the present invention and measuring the sheet under the conditions of 40°C and 90%RH in accordance with JIS K 7129 (lyssy method). Further, the above-mentioned air permeability is a value obtained by producing a sheet having a thickness of 0.5 mm using the resin composition of the present invention and measuring the sheet under the condition of 23°C in accordance with JIS K 7126 (differential pressure method).

### Manufacturing method for resin composition

A manufacturing method for the resin composition of the present invention is not particularly limited and a known method is applicable. For example, the resin composition may be manufactured by mixing together the above-mentioned component (A) and component (B), and as necessary, various additives using a melt-kneading apparatus at a temperature of 140 to 230°C. As the melt-kneading apparatus, for example, an enclosed kneading apparatus such as a Labo Plastomill, a Brabender, a Banbury mixer, a kneader, or a roll and a continuous melt-kneading apparatus such as a batch-type kneading apparatus, a single screw extruder, or a twin screw extruder may be used.

The thus obtained resin composition of the present invention may be molded using a molding method and a molding apparatus generally used for a thermoplastic resin composition, and for example, may be melt-molded by any of extrusion molding, injection molding, press molding, blow molding, and the like.

The resin composition of the present invention has water-vapor barrier properties, gas barrier properties, flexibility, processability, and the like at high levels in a well-balanced manner. Further, the resin composition of the present invention has water-vapor barrier properties and gas barrier properties comparable to or more than those of crosslinked rubbers having high water-vapor barrier properties and high gas barrier properties, such as hydrogenated nitrile rubber (H-NBR), chlorinated butyl rubber (Cl-IIR), and brominated butyl rubber (Br-IIR). In addition, the resin composition may be easily molded by any of press molding, injection molding, extrusion molding, and the like.

### Examples

Hereinafter, the resin composition of the present invention is specifically described in detail.

In Examples 1 to 8 to be described later, resin compositions were prepared using the following materials. Table 1 shows the compositions of the resin compositions of Examples 1 to 8. Numerical values in the columns "Elastomer", "Lubricant", and "Compatibilizer" in the table represent parts by mass. It should be noted that Elastomer 3 is not the component (A) of the invention of the present application. Further, Lubricant 1 is a cyclic polyolefin resin polymerized from a norbornene-based derivative and Lubricant 2 is a cyclic polyolefin copolymer polymerized from a norbornene-based derivative.

### Component A

Elastomer 1: Styrene-isobutylene-styrene block copolymer (SIBS) [manufactured by Kaneka Corporation, trade name: SIBSTAR 073T, content of styrene block (component (b)): 30 mass%].
Elastomer 2: Styrene-isobutylene-styrene block copolymer (SIBS) [manufactured by Kaneka Corporation, trade name: SIBSTAR 102T, content of styrene block (component (b)): 15 mass%].

Thermoplastic elastomer except component A Elastomer 3: Styrene-ethylene/butylene-styrene block copolymer (SEBS) [manufactured by Kuraray Co., Ltd., trade name: SEPTON 8007, content of styrene block: 30 mass%].

### Component B

Lubricant 1: Cyclic polyolefin resin (COP) [manufactured by Zeon Corporation, trade name: 1020R].
Lubricant 2: Cyclic polyolefin copolymer (COC) [manufactured by Polyplastics Co., Ltd., trade name: 6015S-04].

### Additive

Compatibilizer 1: Polybutene [manufactured by Nippon Oil Corporation, trade name: HV-300, number average molecular weight: 1,400].
Compatibilizer 2: Paraffin-based oil (liquid paraffin) [manufactured by Idemitsu Kosan Co. Ltd., trade name: Diana Process Oil PW 150].

### Example 1

In Example 1, a resin composition was produced by mixing 60 parts by mass of Elastomer 1 as a component A, 30 parts by mass of Lubricant 1 as a component B, and 10 parts by mass of Compatibilizer 1.

### Example 2

In Example 2, a resin composition was produced by mixing materials in the same manner as in Example 1 except that Lubricant 1 of Example 1 was changed to Lubricant 2.

### Example 3

In Example 3, a resin composition was produced by mixing materials in the same manner as in Example 1 except that Compatibilizer 1 of Example 1 was changed to Compatibilizer 2.

### Example 4

In Example 4, a resin composition was produced by mixing materials in the same manner as in Example 1 except that Elastomer 1 of Example 1 was changed to Elastomer 2.

### Example 5

In Example 5, a resin composition was produced by mixing materials in the same manner as in Example 1 except that the amounts of Elastomer 1 and Lubricant 1 of Example 1 were changed to 85 parts by mass and 5 parts by mass, respectively.

### Example 6

In Example 6, a resin composition was produced by mixing 50 parts by mass of Elastomer 1, 10 parts by mass of Elastomer 3, and 40 parts by mass of Lubricant 1.

### Example 7

In Example 7, a resin composition was produced by mixing 70 parts by mass of Elastomer 1, 15 parts by mass of Elastomer 3, and 15 parts by mass of Lubricant 1.

### Example 8

In Example 8, a resin composition was produced by mixing materials in the same manner as in Example 7 except that the amount of Lubricant 1 of Example 7 was changed to 10 parts by mass and 5 parts by mass of Compatibilizer 1 were added.

Test pieces for evaluation were produced using those resin compositions and evaluated for Evaluation 1 to Evaluation 4 below. Table 1 shows the results.

### Evaluation 1 Rubber hardness

A sheet having a thickness of 10.0 mm was produced using the above-mentioned resin compositions, measured using a type-A durometer in accordance with JIS K 6253, and evaluated based on the following criteria.
AA: Hardness of less than 65
A: Hardness of 65 or more and less than 75
B: Hardness of 75 or more and less than 80

### Evaluation 2 Water-vapor permeability

A sheet having a thickness of 0.5 mm was produced using the above-mentioned resin compositions, measured for its water-vapor permeability under the conditions of 40°C and 90%RH in accordance with JIS K 7129, and evaluated based on the following criteria.
AA: Water-vapor permeability of less than 0.5 g/m² · 24 h
A: Water-vapor permeability of 0.5 g/m² · 24 h or more and less than 0.8 g/m² · 24 h
B: Water-vapor permeability of 0.8 g/m² · 24 h or more and less than 1.5 g/m² · 24 h

### Evaluation 3 Air permeability

A sheet having a thickness of 0.5 mm was produced using the above-mentioned resin composition, measured for its air permeability under the condition of 23°C in accordance with JIS K 7126, and evaluated based on the following criteria.
AA: Air permeability of less than 0.5×10⁻¹⁰ cm³· cm/cm² · s · cmHg
A: Air permeability of 0.3×10⁻¹⁰ cm³ · cm/cm² · s · cmHg or more and less than 0.8×10⁻¹⁰ cm³ · cm/cm² · s · cmHg
B: Air permeability of 0.8×10⁻¹⁰ cm³ · cm/cm² · s · cmHg or more and less than 1.5×10⁻¹⁰ cm³· cm/cm² · s · cmHg

### Evaluation 4 Processability

The processability of the above-mentioned resin compositions was evaluated using an average surface roughness (Ra) of an ink supply tube formed of the resin compositions under the condition of a constant extrusion rate. There is a correlation between the extrusion rate of the resin composition and the average surface roughness, and as the extrusion rate increases, the average surface roughness also increases. In order to maintain the quality of an ink supply tube, the average surface roughness is preferably 10 µm or less. In other words, a material which may be molded at a higher extrusion rate under this condition has better processability.

The average surface roughness (Ra) was measured using a five line confocal microscope S130 (trade name) manufactured by Lasertec Corporation. A 20x objective lens was used and the Z resolution was 0.2 µm. It should be noted that the average surface roughness (Ra) means an arithmetic average roughness defined in JIS B 0601; 2001.

The above-mentioned resin materials were melt-kneaded using a batch-type kneading apparatus, and subjected to extrusion molding with an extrusion molding apparatus at an extrusion rate of 1.5 m·min⁻¹ to produce an ink supply tube having a size with a tube inner diameter of 2.5 mm and a tube outer diameter of 4.5 mm. The ink supply tube was evaluated based on the following criteria.
AA: Ink supply tube having an average surface roughness (Ra) of less than 3 µm.
A: Ink supply tube having an average surface roughness (Ra) of 3 µm or more and less than 6 µm
B: Ink supply tube having an average surface roughness (Ra) of 6 µm or more and less than 10 µm

**Table 1**

| | | Example 1 | Example 2 | Example 3 | Example 4 | Example 5 | Example 6 | Example 7 | Example 8 |
|---|---|---|---|---|---|---|---|---|---|
| Component (A) | Elastomer 1 | 60 | 60 | 60 | | 85 | 50 | 70 | 70 |
| Component (A) | Elastomer 2 | | | | 60 | | | | |
| Additional component | Elastomer 3 | | | | | | 10 | 15 | 15 |
| Component (B) | Lubricant 1 | 30 | | 30 | 30 | 5 | 40 | 15 | 10 |
| Component (B) | Lubricant 2 | | 30 | | | | | | |
| Additional component | Compatibilizer 1 | 10 | 10 | | 10 | 10 | | | 5 |
| Additional component | Compatibilizer 2 | | | 10 | | | | | |
| Evaluation 1 | Hardness | A | A | A | AA | AA | B | AA | AA |
| Evaluation 2 | Water-vapor permeability | AA | AA | B | AA | A | AA | A | A |
| Evaluation 3 | Air permeability | AA | AA | B | AA | A | AA | A | A |
| Evaluation 4 | Processability | AA | AA | AA | AA | B | AA | A | A |

In Examples 1 to 8 above, good evaluation results were obtained in any of evaluation items.

The resin compositions of Examples 1 to 8, which show satisfactory evaluation results, have water-vapor barrier properties and gas barrier properties comparable to or more than those of crosslinked rubbers having high water-vapor barrier properties and high gas barrier properties, such as hydrogenated nitrile rubber (H-NBR), chlorinated butyl rubber (Cl-IIR), and brominated butyl rubber (Br-IIR), and can be easily molded by any of press molding, injection molding, extrusion molding, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A resin composition for ink jet, comprising at least a component (A) and a component (B), wherein the component (A) comprises a (b)-(a)-(b) type isobutylene-based triblock copolymer composed of an isobutylene-based polymer block (a) and a styrene-based polymer block (b), and the component (B) comprises a cyclic-polyolefin-based polymer.

2. A resin composition according to claim 1, wherein the resin composition has a rubber hardness (JIS K 6253) of less than 80.

3. A resin composition according to claim 1, wherein the resin composition has a water-vapor permeability of less than 1.5 g/m² · 24 h as measured at 40°C and 90%RH using a sheet having a thickness of 0.5 mm by a lyssy method in accordance with JIS K 7129, and has an air permeability of less than 1.5×10⁻¹⁰ cm³ · cm/cm² · s · cmHg as measured at 23°C using a sheet having a thickness of 0.5 mm by a differential pressure method in accordance with JIS K 7126.

4. A resin composition according to claim 1, wherein the cyclic-polyolefin-based polymer is one of a ring-opening polymerization reaction product of a norbornene-based derivative and a copolymerization reaction product of a norbornene-based derivative.
